# EUROPÄISCHE PATENTSCHRIFT

(11) **EP 3 305 053 B1**
(45) Veröffentlichungstag und Bekanntmachung des Hinweises auf die Patenterteilung: **14.04.2021**
(21) Anmeldenummer: 17185536.4
(22) Anmeldetag: 09.08.2017
(51) Int. Cl.: A01B 63/112, A01B 69/00

(54) **VERFAHREN UND SYSTEM ZUR BESTIMMUNG EINES BETRIEBSPUNKTES**
METHOD AND SYSTEM FOR DETERMINING AN OPERATING POINT
PROCÉDÉ ET SYSTÈME DE DÉTERMINATION D'UN POINT DE FONCTIONNEMENT

(30) Priorität: 28.09.2016 DE 102016118297
(43) Veröffentlichungstag der Anmeldung: 11.04.2018
(73) Patentinhaber: CLAAS Tractor S.A.S., 78141 Vélizy-Villacoublay Cedex (FR)
(72) Erfinder: Wieckhorst, Jan Carsten, 33098 Paderborn (DE); Ehlert, Christian, 33719 Bielefeld (DE)
(74) Vertreter: CLAAS Gruppe

(56) Entgegenhaltungen:
- WO-A1-2013/013917
- WO-A1-2016/045868
- DE-A1-102013 106 548
- JP-A- 2000 316 313

## Beschreibung

Die Erfindung betrifft ein Verfahren und ein System zur Bestimmung eines Betriebspunktes eines landwirtschaftlichen Fahrzeuges gemäß den Ansprüchen 1 und 10.

Landwirtschaftliche Fahrzeuge wie Traktoren werden oftmals für Bodenarbeiten eingesetzt, bei denen hohe Zugkräfte notwendig sind, beispielsweise beim Pflügen. Besonders bei dieser schweren Bodenbearbeitung treten Leistungsverluste durch Schlupf zwischen dem Boden und den Bodeneingriffsmitteln des Fahrzeuges sowie durch Rollwiderstände der Bodeneingriffsmittel auf. Die Bodeneingriffsmittel können hierbei in Form von, insbesondere luftgefüllten, Reifen und/oder Raupenlaufwerken ausgebildet sein. Diese Leistungsverluste können durch Veränderung einer Aufstandsfläche der Bodeneingriffsmittel, beispielsweise durch Veränderung des Reifendruckes und/oder durch Anpassung einer Ballastierung des landwirtschaftlichen Fahrzeuges, beeinflusst werden. Das Einstellen eines geeigneten Reifendruckes und das Auswählen einer entsprechenden Ballastierung des Fahrzeuges sind jedoch selbst für einen erfahrenen Benutzer nicht einfach. Häufig wird dabei versucht, den Schlupf zwischen dem Boden und den Bodeneingriffsmitteln des Fahrzeuges zu reduzieren, um dadurch den Leistungsverlust zu senken und eine sogenannte Traktionseffizienz zu erhöhen.

Zur Unterstützung des Bedieners bei der Auswahl der Ballastierung sind aus der WO 2016/045868 A1 ein Verfahren und ein System bekannt, um aus einer Vielzahl an Ballastierungsoption eine Option auszuwählen und anzuzeigen, wenn das landwirtschaftliche Fahrzeug mit einem Anbaugerät verbunden ist. Hierbei werden über die Art des Anbaugerätes Betriebsbereiche von bis zu drei Betriebsparametern, beispielsweise Arbeitsgeschwindigkeit, Last des Anbaugerätes oder Antriebsmotorleistung des Fahrzeuges definiert. Eine Auswahl einer Option erfolgt unter anderem in Abhängigkeit einer Prävalenz oder Eintrittswahrscheinlichkeit, wodurch beispielsweise Ballastierungsoptionen nahe an Grenzwerten vernachlässigt werden können. In Abhängigkeit der gewählten Ballastierungsoption kann dabei eine Reifendruckregelung erfolgen. Nachteilig ist hierbei jedoch, dass die hinterlegten Ballastierungsoptionen jeweils anbaugerätabhängig ausgewählt werden und unter anderem nur auf angenommen Durchschnittswerten eines Schlupfes und eines Rollwiderstandes basieren.

Ein Verfahren und ein System der eingangs genannten Art sind aus der DE 10 2013 106 548 A1 bekannt.

Es ist daher die Aufgabe der vorliegenden Erfindung, ein Verfahren und ein System zur Bestimmung eines Betriebspunktes eines landwirtschaftlichen Fahrzeuges bereitzustellen, welches eine verbesserte Reduzierung der Leistungsverluste ermöglicht.

Die Lösung der Aufgabe erfolgt erfindungsgemäß durch die Merkmale der unabhängigen Ansprüche 1 und 10. Vorteilhafte Ausgestaltungen der Erfindung sind in den Unteransprüchen angegeben.

Die Erfindung betrifft ein Verfahren zur Bestimmung eines Betriebspunktes eines landwirtschaftlichen Fahrzeuges mit Bodeneingriffsmitteln zur Abstützung des Fahrzeuges gegenüber einem Boden, einem Antriebsmotor zum Antrieb der Bodeneingriffsmittel, Sensoren zur Erzeugung von Sensorsignalen, wobei ein Sensorsignal als Funktion eines gemessenen Fahrzeugparameters generierbar ist, und einer Auswerteeinheit zur Durchführung des Verfahrens und zur Erfassung und Auswertung zumindest von Sensorsignalen. Kennzeichnend für die Erfindung ist, dass in die Auswerteeinheit mindestens ein Eingabeparameter eingegeben wird, welcher insbesondere für eine Kraftübertragung zwischen dem Boden und Bodeneingriffsmitteln relevant ist, basierend auf dem mindestens einen Eingabeparameter mindestens ein Kennfeld für Betriebsparameter des Fahrzeuges durch die Auswerteeinheit erstellt wird, ein optimaler Betriebspunkt für das Fahrzeug basierend auf dem Kennfeld bestimmt und/oder basierend auf einer Position des Fahrzeuges aus einer Speichereinheit abgerufen wird, ein aktueller Betriebspunkt basierend auf erfassten Fahrzeugparametern durch die Auswerteeinheit ermittelt wird, und der aktuelle Betriebspunkt mit dem optimalen Betriebspunkt verglichen wird. Die Ermittlung des tatsächlichen Betriebspunktes und dessen Vergleich mit einem optimalen Betriebspunkt, welcher insbesondere aus einem an die tatsächlichen Betriebsbedingungen angepassten Kennfeld generiert werden kann, ermöglicht beispielsweise einem Bediener eine Anpassung des tatsächlichen Betriebspunktes an den optimalen Betriebspunkt für die tatsächlichen Bodenbedingungen und/oder Erntebedingungen. Dies hat den Vorteil, dass Leistungsverluste, beispielsweise aufgrund eines Schlupfes und/oder Rollwiderstandes, unter Berücksichtigung der tatsächlichen Arbeitsbedingungen verringert und somit Leistungsverluste gesenkt und die Effizienz gesteigert werden können.

In einer bevorzugten Ausgestaltung der Erfindung werden basierend auf dem Vergleich zum Erreichen des optimalen Betriebspunktes notwendige Änderungen der Betriebsparameter und/oder Fahrzeugparameter durch die Auswerteeinheit bestimmt, ausgegeben und/oder zumindest teilweise automatisch geregelt. Die Optimierung des Betriebspunktes erfolgt dabei, insbesondere kontinuierlich und/oder automatisch, besonders über eine Regelung der Betriebsparameter und/oder Fahrzeugparameter. Dies hat den Vorteil, dass Leistungsverluste aufgrund eines Schlupfes und/oder Rollwiderstandes unter Berücksichtigung der tatsächlichen Arbeitsbedingungen weiter verringert und somit Leistungsverluste weiter gesenkt und die Effizienz weiter gesteigert werden können.

Vorteilhafterweise wird das Kennfeld basierend auf den Eingabeparametern durch Abrufen eines gespeicherten Kennfeldes und/oder Anpassen eines gespeicherten Kennfeldes erstellt. Durch das Abrufen eines gespeicherten Kennfeldes, welches zu den eingegebenen Eingabeparametern passt, kann die Ermittlung eines optimalen Betriebspunktes beschleunigt werden. Ebenso kann durch das Anpassen eines bereits vorhandenen, gespeicherten Kennfeldes an die eingegebenen Eingabeparameter und somit die tatsächlichen Betriebsbedingungen der Aufwand zur Ermittlung des Kennfeldes verringert werden.

In einer besonders bevorzugten Ausgestaltung der Erfindung wird ein Kennfeld durch kontinuierliche und/oder diskontinuierliche Aufzeichnung und Speicherung von tatsächlichen Betriebspunkten und/oder Betriebsparametern generiert und gespeichert. Durch die Generierung eines Kennfeldes basierend auf tatsächlich aufgezeichneten Betriebspunkten und/oder Betriebsparametern kann ein verbessertes Kennfeld, insbesondere unter Berücksichtigung der jeweiligen Positionsdaten des Fahrzeuges mit positionsbezogenen und/oder schlagbezogenen Daten, generiert werden. Dies hat den Vorteil, dass die Genauigkeit des Kennfeldes und des ermittelten Betriebspunktes weiter verbessert werden kann.

In einer weiterhin bevorzugten Ausgestaltung des Verfahrens wird ein, insbesondere aus dem Kennfeld ermittelter, optimaler Betriebspunkt mit Positionsdaten verknüpft und abrufbar gespeichert. Dadurch können optimale Betriebspunkte positionsbezogen für eingegebene Bodenbedingungen und/oder Erntebedingungen gespeichert werden, wodurch ein vereinfachter Vergleich, insbesondere ohne Kennfeldgenerierung, ermöglicht werden kann.

In einer bevorzugten Ausgestaltung des Verfahrens wird eine grafische Darstellung des Kennfeldes von Betriebsparametern und/oder Fahrzeugparametern generiert und ausgegeben. Die Ausgabe kann dabei in Form von Diagrammen und/oder Balkendiagrammen, insbesondere basierend auf den Betriebsparametern, erfolgen. Dies hat den Vorteil, dass einem Bediener die Informationen zu dem Kennfeld, dem aktuellen und/oder optimalen Betriebspunkt visuell auf einfach wahrzunehmende Weise dargestellt werden können. Ebenso können Handlungsempfehlungen zur Erreichung des optimalen Betriebszustandes generiert und grafisch angezeigt werden.

Gemäß dem Verfahrens erfolgt eine Steuerung und/oder Regelung des dargestellten Betriebspunktes, der Betriebsparameter und/oder der Fahrzeugparameter durch Interaktion mit der jeweiligen grafischen Darstellung des Betriebspunktes und/oder des jeweiligen Parameters. Dies kann beispielsweise mittels eines Touchscreen-Bildschirms erfolgen. Dies hat den Vorteil, dass eine Anpassung des dargestellten Betriebspunktes, der Betriebsparameter und/oder der Fahrzeugparameter auf einfach zu erfassende Art und Weise durch den Bediener erfolgen kann, wodurch die Arbeitsbelastung des Bedieners weiter gesenkt werden kann.

Vorzugsweise wird durch das Verfahren ein Bodenverdichtungsrisiko basierend auf den Eingabeparametern und/oder den Betriebsparametern ermittelt. Dies hat den Vorteil, dass einem Bediener rechtzeitig ein Hinweis auf eine beispielsweise zu hohe Bodenverdichtung gegeben werden kann, so dass durch Änderung der Betriebsparameter und/oder Fahrzeugparameter eine zu hohe Bodenverdichtung vermieden werden kann.

Vorteilhafterweise ist ein Betriebsparameter ein Traktionskoeffizient, eine Traktionseffizienz, ein Rollwiderstandskoeffizient und/oder ein Schlupf. Ein Fahrzeugparameter, welcher auf Sensordaten basiert, ist vorteilhafterweise ein Reifendruck, eine Raddrehzahl, eine Zugkraft, eine Radkraft, eine Achslast, ein Raddrehmoment und/oder eine Motordrehzahl.

Die Erfindung betrifft weiterhin ein System zur Bestimmung eines Betriebspunktes für ein landwirtschaftliches Fahrzeug mit Bodeneingriffsmitteln zur Abstützung des Fahrzeuges gegenüber einem Boden, einem Antriebsmotor zum Antrieb der Bodeneingriffsmittel, Sensoren zur Erzeugung von Sensorsignalen, wobei ein Sensorsignal als Funktion eines gemessenen Fahrzeugparameters generierbar ist, und einer Auswerteeinheit zur Erfassung und Auswertung zumindest von Sensorsignalen. Gemäß der Erfindung ist in die Auswerteeinheit mindestens ein Eingabeparameter eingebbar, welcher insbesondere für eine Kraftübertragung zwischen dem Boden und Bodeneingriffsmitteln relevant ist, basierend auf dem mindestens einen Eingabeparameter mindestens ein Kennfeld für Betriebsparameter des Fahrzeuges durch die Auswerteeinheit erstellbar ist, ein optimaler Betriebspunkt für das Fahrzeug basierend auf dem Kennfeld bestimmbar und/oder basierend auf einer Position des Fahrzeuges aus einer Speichereinheit abrufbar ist, ein aktueller Betriebsparameter basierend auf erfassten Fahrzeugparametern, insbesondere Sensordaten, durch die Auswerteeinheit ermittelbar ist, und der aktuelle Betriebspunkt mit dem optimalen Betriebspunkt vergleichbar ist. Die Ermittlung des tatsächlichen Betriebspunktes und dessen Vergleich mit einem optimalen Betriebspunkt, welcher insbesondere aus einem an die tatsächlichen Betriebsbedingungen angepassten Kennfeld generiert werden kann, ermöglicht beispielsweise einem Bediener eine Anpassung des tatsächlichen Betriebspunktes an den optimalen Betriebspunkt für die tatsächlichen Bodenbedingungen und/oder Erntebedingungen. Dies hat den Vorteil, dass Leistungsverluste, beispielsweise aufgrund eines Schlupfes und/oder Rollwiderstandes, unter Berücksichtigung der tatsächlichen Arbeitsbedingungen verringert und somit Leistungsverluste gesenkt und die Effizienz gesteigert werden können.

In einer vorteilhaften Ausgestaltung des Systems sind basierend auf dem Vergleich zum Erreichen des optimalen Betriebspunktes notwendige Änderung der Betriebsparameter und/oder Fahrzeugparameter durch die Auswerteeinheit bestimmbar, ausgebbar und/oder zumindest teilweise automatisch regelbar. Die Optimierung des Betriebspunktes erfolgt dabei, insbesondere kontinuierlich und/oder automatisch, besonders über eine Regelung der Betriebsparameter und/oder Fahrzeugparameter. Dies hat den Vorteil, dass Leistungsverluste aufgrund eines Schlupfes und/oder Rollwiderstandes unter Berücksichtigung der tatsächlichen Arbeitsbedingungen weiter verringert und somit Leistungsverluste weiter gesenkt und die Effizienz weiter gesteigert werden können.

Weiterhin betrifft die Erfindung ein landwirtschaftliches Fahrzeug mit einem wie oben beschriebenen System eingerichtet zur Bestimmung eines Betriebspunktes gemäß einem wie weiter oben beschriebenen Verfahren, wobei das Fahrzeug ballastierbar ist, eine regelbare Motordrehzahl aufweist und/oder ein Druck in mindestens einem Bodeneingriffsmittel regelbar ist.

Nachfolgend wird die Erfindung unter Bezugnahme auf die anliegenden Zeichnungen näher erläutert.

Es zeigen:
- Fig. 1:: eine schematische Seitenansicht eines landwirtschaftlichen Fahrzeuges;
- Fig. 2:: eine Darstellung eines Ablaufes eines Verfahrens zur Bestimmung und Einstellung eines Betriebspunktes;
- Fig. 3a:: ein erstes ermitteltes Kennfeld;
- Fig. 3b:: ein zweites ermitteltes Kennfeld;

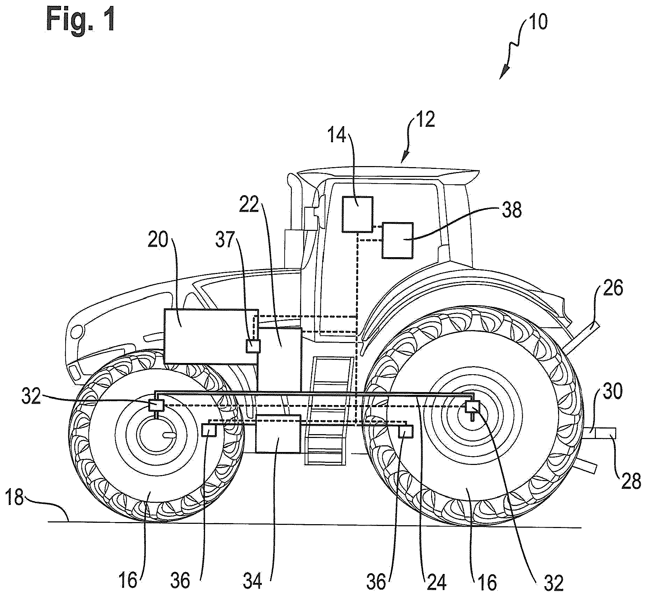

In Fig. 1 ist ein landwirtschaftliches Fahrzeug 10 in Form eines Traktors schematisch von der Seite dargestellt, wobei der grundsätzliche Aufbau eines Traktors als dem Fachmann bekannt ngenommen wird. Ein landwirtschaftliches Fahrzeug 10 im Sinne der Erfindung kann jedes zur landwirtschaftlichen Arbeit einsetzbare Fahrzeug sein, beispielsweise ein Traktor, ein Teleskoplader, eine Baumaschine oder eine selbstfahrende Erntemaschine. Der Traktor weist zur Aufnahme eines Bedieners eine geschlossene Fahrerkabine 12 auf, wobei innerhalb der Fahrerkabine 12 ein Bedienterminal 14 zur Bedienung des landwirtschaftlichen Fahrzeuges 10 angeordnet ist. Das landwirtschaftliche Fahrzeug 10 weist mehrere an einer Vorderachse und einer Hinterachse angeordnete Bodeneingriffsmittel 16 in Form von luftgefüllten Rädern auf, welche mit einem Boden 18 zur Übertragung von Antriebskräften in Eingriff stehen. Die Bodeneingriffsmittel 16 werden durch einen Antriebsmotor 20, welcher in Form eines Verbrennungsmotors mit einem Drehzahlsensor 37 ausgebildet ist, und einem mit diesem zusammenwirkenden Getriebe 22 angetrieben. Das Getriebe 22 kann dabei beispielsweise in Form eines hydraulisch-mechanisch leistungsverzweigten Getriebes ausgebildet sein, welches in dem hydraulischen Leistungszweig Hydrostaten aufweist. Ein Abtriebsdrehmoment des Getriebes 22 wird über einen Antriebsstrang 24, welcher schematisch dargestellt ist, auf die Bodeneingriffsmittel 16 übertragen, wobei das dargestellte landwirtschaftliche Fahrzeug 10 ein allradgetriebenes Fahrzeug ist.

Zum Ziehen eines landwirtschaftlichen Arbeitsgerätes (nicht dargestellt), beispielsweise eines Pfluges oder einer Ballenpresse, weist das landwirtschaftliche Fahrzeug 10 unterschiedliche Anhängervorrichtungen auf. Der dargestellte Traktor weist heckseitig einen Heckkraftheber 26 sowie ein Zugpendel 28 auf. Ein beispielsweise an dem Zugpendel 28 angehängtes Arbeitsgerät bewirkt eine im Wesentlichen horizontale an dem Zugpendel 28 wirkende Zugkraft, welche über einen Zugkraftsensor 30 gemessen werden kann. Über Radsensoren 32, welche den jeweiligen Bodeneingriffsmitteln 16 zugeordnet sind, können beispielsweise jeweils eine Drehzahl, eine Radkraft, ein Raddrehmoment und/oder eine Achslast, welche an dem jeweiligen Bodeneingriffsmittel 16 wirkt, erfasst werden. Weiterhin weist das landwirtschaftliche Fahrzeug 10 eine Reifendruckregelanlage 34 auf, über welche der Druck P_{A,B}, welcher jeweils in einem Bodeneingriffsmittel 16 wirkt, einstellbar ist. Der jeweils in einem Bodeneingriffsmittel 16 wirkende Druck P_{A,B} kann dabei jeweils mittels eines Drucksensors 36 erfasst werden. Die durch die Sensoren 30, 32, 36, 37 generierten Sensorsignale können durch eine Auswerteeinheit 38 erfasst werden, und zu Fahrzeugparametern wie einem Druck P_{A,B} in den Bodeneingriffsmitteln 16, einer Raddrehzahl, einer Zugkraft, einer Radkraft, einer Achslast, ein Raddrehmoment und/oder einer Motordrehzahl verarbeitet werden.

Gemäß der Erfindung kann in die Auswerteeinheit 38 mindestens ein Eingabeparameter P_{E} eingegeben werden. Dies kann beispielsweise über das Bedienterminal 14 erfolgen, welches mit der Auswerteeinheit 38 in Verbindung steht. Ein Eingabeparameter P_{E} kann dabei eine Bodenart, eine Bodenfeuchtigkeit, ein Vegetationszustand, ein Vegetationsstatus, eine Bodendichte, ein aktueller Druck P_{A,B} und/oder ein Bodeneingriffsmitteltyp sein. Hierdurch kann durch einen Bediener ein Verfahren zur Bestimmung, und insbesondere Einstellung, eines Betriebspunktes BP_{ist, soll} für das landwirtschaftliche Fahrzeug 10 gestartet werden.

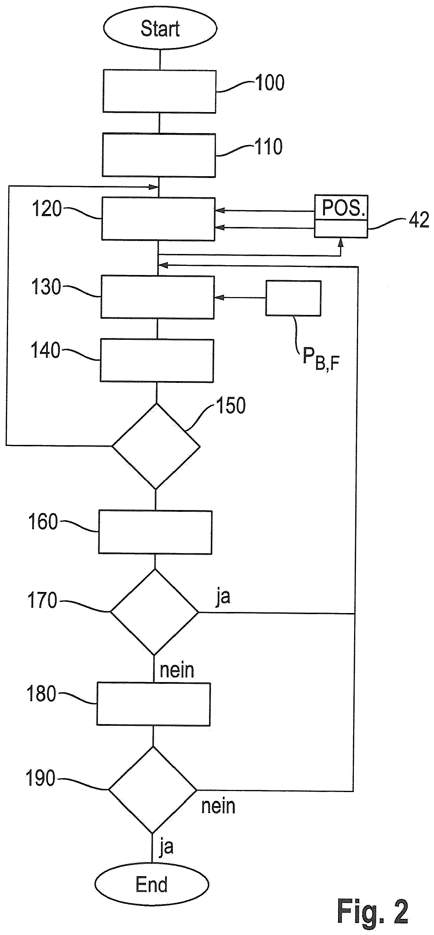

In Fig. 2 ist ein Ablaufdiagramm des Verfahrens dargestellt. In einem ersten Schritt 100 erfolgt beispielsweise durch den Bediener eine Eingabe der Eingabeparameter P_{E}. Hierdurch werden durch den Bediener im Wesentlichen die Eigenschaften des Bodens 18 in die Auswerteeinheit 38 eingegeben. Diese Eingabeparameter P_{E} dienen dabei als Grundlage zur Erstellung mindestens eines Kennfeldes 40,47, welches in einem zweiten Schritt 110 des Verfahrens erfolgt. Das Kennfeld 40,47 ist dabei eine grafische Darstellung von Betriebsparametern P_{B}, wie beispielsweise einer Traktionseffizienz η, eines Traktionskoeffizienten κ, eines Rollwiderstandskoeffizienten 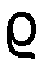 oder eines Schlupfes 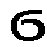 . Basierend auf dem Kennfeld 40,47 wird in einem dritten Schritt 120 ein optimaler Betriebspunkt BPₛₒₗₗ ermittelt, welcher beispielsweise einem Maxima innerhalb des Kennfeldes 40,47 entspricht und daraus die entsprechenden Betriebsparameter P_{B} ermittelt werden können.

Hierdurch kann beispielsweise für einen bestimmten Eingabeparameter P_{E} und ein entsprechendes Kennfeld 40,47, welches beispielsweise einen Schlupf 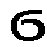 über eine Traktionseffizienz η darstellt, der optimale Schlupf 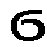 für gegebene Eingabeparameter P_{E}, wie die aktuelle Bodenbeschaffenheit, ermittelt werden. Ebenfalls ist es möglich, dass ein optimaler Betriebspunkt BPₛₒₗₗ anhand einer Position des landwirtschaftlichen Fahrzeuges 10 aus einer Speichereinheit 42 abrufbar ist. Hierbei können insbesondere ältere, bereits abrufbar gespeicherte optimale Betriebspunkte BPₛₒₗₗ für die eingegebenen Eingabeparameter P_{E} und die aktuelle Position des Fahrzeuges 10 genutzt werden. Für aus einem Kennfeld ermittelte optimale Betriebspunkte BPₛₒₗₗ ist es möglich, diese in der Speichereinheit 42, insbesondere in Verbindung mit den aktuellen Positionsdaten, zu hinterlegen. In einem vierten Schritt 130 erfolgt eine Ermittlung des aktuellen Betriebspunktes BPist durch die Auswerteeinheit 38 basierend auf den aktuell erfassten Fahrzeugparametern P_{F}. Dieser ermittelte aktuelle Betriebspunkt BPist kann ebenfalls in der Speichereinheit 42 in Verbindung mit den Positionsdaten und insbesondere auch mit zugehörigen Wetterdaten, welche einen Einfluß auf die Bodenbeschaffenheit haben können, hinterlegt werden. In einem fünften Schritt 140 erfolgt dann durch die Auswerteeinheit 38 ein Vergleich des ermittelten aktuellen Betriebspunktes BPist mit dem ermittelten optimalen Betriebspunkt BPₛₒₗₗ. Falls der aktuelle Betriebspunkt BPist dem optimalen Betriebspunkt BPₛₒₗₗ entspricht, wird der dritte Schritt 120 wiederholt, in welchem der optimale Betriebspunkt BPₛₒₗₗ erneut ermittelt wird. Dies kann beispielsweise unter Berücksichtigung einer veränderten Position und/oder beispielsweise sich verändernden Wetterdaten erfolgen. Bei einem Vergleich des aktuellen Betriebspunktes BPist mit dem optimalen Betriebspunkt BPₛₒₗₗ kann eine einstellbare Abweichung zugelassen werden, welche noch als Übereinstimmung gelten kann.

Bei einer Abweichung des aktuellen Betriebspunktes BPist von dem optimalen Betriebspunkt BPₛₒₗₗ schließt sich dem ersten Entscheidungsschritt 150 in dem sechsten Schritt 160 eine grafische Ausgabe des aktuellen Betriebspunktes BPist und des optimalen Betriebspunktes BPₛₒₗₗ an. Ebenso kann eine Ausgabe des Kennfeldes sowie der Betriebsparameter P_{B} und/oder Fahrzeugparameter P_{F} erfolgen. In dem anschließenden zweiten Entscheidungsschritt 170 ist für den Fall, dass eine manuelle Steuerung der Betriebsparameter P_{B} und/oder Fahrzeugparameter P_{F} erfolgen soll, eine Steuerung der entsprechenden Parameter P_{B,F} durch den Bediener erforderlich, wobei das Verfahren nach einer Steuerung durch den Bediener mit dem fünften Schritt 140 fortgesetzt wird.

Falls keine manuelle Steuerung durch den Bediener erfolgen soll, wird das Verfahren mit dem siebten Schritt 180 fortgesetzt, in dem eine automatische Steuerung und Regelung der Fahrzeugparameter P_{F} und/oder Betriebsparameter P_{B} durch die Auswerteeinheit 38 erfolgt, um den optimalen Betriebspunkt BPₛₒₗₗ zu erreichen. Dem siebten Schritt 180 schließt sich der dritte Entscheidungsschritt 190 an, in dem eine Beendigung des Verfahrens abgefragt wird, beispielsweise für den Fall, dass die Bearbeitung eines Schlages beendet werden soll. Dies kann durch eine entsprechende Eingabe des Bedieners zum Beispiel an dem Bedienterminal 14 oder auch automatisch anhand einer Fahrzeugposition erfolgen. Falls kein Ende des Verfahrens aktiviert oder ausgewählt wird, wird das Verfahren mit dem vierten Schritt 130 fortgesetzt, in dem der aktuelle Betriebspunkt BPᵢₛₜ erneut ermittelt wird, basierend auf den veränderten Fahrzeugparametern P_{F} und/oder Betriebsparametern P_{B}.

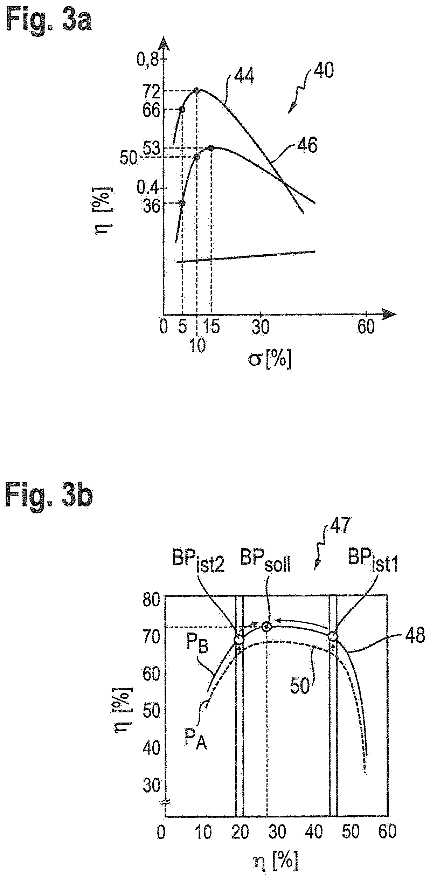

In Fig. 3a sind beispielhaft in einem ersten Kennfeld 40 zwei Kennlinien 44,46 überlappend dargestellt, wobei hierbei die Traktionseffizienz η als Funktion des Schlupfes 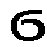 dargestellt ist. Die erste Kennlinie 44 weist dabei ein Maximum der Traktionseffizienz η in einem Bereich von ungefähr 10% Schlupf 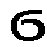 auf. Die zweite Kennlinie 46 hingegen ist derart ausgebildet, dass ein Maximum der Traktionseffizienz η bei einem Schlupf von 15% erreicht wird. Anhand dieser beiden Kennlinien 44, 46 kann deutlich dargestellt werden, dass bei unterschiedlichen Bodenbedingungen, welche dann auch unterschiedlichen Eingabeparametern P_{E} entsprechen, eine maximale Traktionseffizienz η bei unterschiedlichem Schlupf 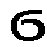 erreicht werden kann, wobei ein niedriger Schlupf 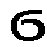 nicht unbedingt immer der höchsten Traktionseffizienz η entspricht. In Fig. 3b ist ein zweites Kennfeld 47 dargestellt, in welchem die Traktionseffizienz η als Funktion des Traktionskoeffizienten κ dargestellt ist. Der Traktionskoeffizient κ ist dabei im Wesentlichen von einer Ballastierung des Fahrzeuges 10 und/oder der Zuglast abhängig. In dem zweiten Kennfeld 47 ist ein optimaler Betriebspunkt BPₛₒₗₗ eingezeichnet, welcher auf der dritten Kennlinie 48 liegt. Der optimale Betriebspunkt BPₛₒₗₗ entspricht dabei ungefähr einer Traktionseffizienz η von 72% und einem Traktionskoeffizienten κ von ungefähr 28%. Weiterhin sind auf der dritten Kennlinie 48 ein erster aktueller Betriebspunkt BP_{ist,1} und ein zweiter aktueller Betriebspunkt BP_{ist,2} dargestellt. Der erste aktuelle Betriebspunkt BP_{ist,1} entspricht dabei einem Traktionskoeffizienten κ von ungefähr 45% und würde eine Unterballastierung des landwirtschaftlichen Fahrzeuges 10 darstellen. Der zweite aktuelle Betriebspunkt BP_{ist,2} entspricht einem Traktionskoeffizienten κ von ungefähr 20%, welcher einer Überballastierung des landwirtschaftlichen Fahrzeuges 10 entsprechen würde. Die dritte Kennlinie 48 entspricht einem Druck P_{B} in den Bodeneingriffsmitteln 16. Die vierte Kennlinie 50, welche unterhalb der dritten Kennlinie 48 dargestellt ist, entspricht einem Reifendruck P_{A} in den Bodeneingriffsmitteln 16, welcher höher sein kann als der Reifendruck P_{B}. Hierdurch wird ersichtlich, dass eine Absenkung des Reifendruckes von P_{A} auf P_{B} notwendig ist, um überhaupt durch eine Veränderung des aktuellen Betriebspunktes BPist den optimalen Betriebspunkt BPₛₒₗₗ erreichen zu können. Für eine Verschiebung des ersten und/oder zweiten aktuellen Betriebspunktes BP_{ist, 1,2} entlang der dritten Kennlinie 48 ist in dem dargestellten Beispiel eine Veränderung der Ballastierung an dem Fahrzeug 10 notwendig. Die notwendige Veränderung in der Ballastierung kann dem Bediener grafisch dargestellt werden, beispielsweise anhand von Betriebsparametern P_{B} oder Fahrzeugparametern P_{F}, wobei jeweils ein optimaler Bereich grafisch hervorgehoben werden kann.

### Bezugszeichenliste

- 10: landwirtschaftliches Fahrzeug
- 12: Fahrerkabine
- 14: Bedienterminal
- 16: Bodeneingriffsmittel
- 18: Boden
- 20: Antriebsmotor
- 22: Getriebe
- 24: Antriebsstrang
- 26: Heckkraftheber
- 28: Zugpendel
- 30: Zugkraftsensor
- 32: Radsensor
- 34: Reifendruckregelanlage
- 36: Drucksensor
- 37: Drehzahlsensor
- 38: Auswerteeinheit
- 40: erstes Kennfeld
- 42: Speichereinheit
- 44: erste Kennlinie
- 46: zweite Kennlinie
- 47: zweites Kennfeld
- 48: dritte Kennlinie
- 50: vierte Kennlinie

- BPᵢₛₜ: aktueller Betriebspunkt
- BPₛₒₗₗ: optimaler Betriebspunkt
- P_{E}: Eingabeparameter
- P_{B}: Betriebsparameter
- P_{F}: Fahrzeugparameter
- P_{A,B}: Druck

η Traktionseffizienz
κ Traktionskoeffizient
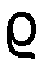 Rollwiderstandskoeffizient
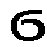 Schlupf
- 100: erster Schritt
- 110: zweiter Schritt
- 120: dritter Schritt
- 130: vierter Schritt
- 140: fünfter Schritt
- 150: erster Entscheidungsschritt
- 160: sechster Schritt
- 170: zweiter Entscheidungsschritt
- 180: siebter Schritt
- 190: dritter Entscheidungsschritt

## Patentansprüche

1. Verfahren zur Bestimmung eines Betriebspunktes (BP_{ist,soll}) für ein landwirtschaftliches Fahrzeug (10) mit Bodeneingriffsmitteln (16) zur Abstützung des Fahrzeugs (10) gegenüber einem Boden (18), einem Antriebsmotor (20) zum Antrieb der Bodeneingriffsmittel (16), Sensoren (30, 32, 36, 37) zur Erzeugung von Sensorsignalen, wobei ein Sensorsignal als Funktion eines gemessenen Fahrzeugparameters (P_{F}) generierbar ist, und einer Auswerteinheit (38) zur Durchführung des Verfahrens und zur Erfassung und Auswertung zumindest von Sensorsignalen, **dadurch gekennzeichnet, dass**
in die Auswerteinheit (38) mindestens ein Eingabeparameter (P_{E}) eingegeben wird, basierend auf dem mindestens einen Eingabeparameter (P_{E}) mindestens ein Kennfeld (40, 47) für Betriebsparameter (P_{B}) des Fahrzeuges (10) durch die Auswerteeinheit (38) erstellt wird und ein optimaler Betriebspunkt (BPₛₒₗₗ) basierend auf dem Kennfeld (40, 47) bestimmt und/oder basierend auf einer Position des Fahrzeuges aus einer Speichereinheit (42) abgerufen wird, ein aktueller Betriebsparameter (BPᵢₛₜ) basierend auf erfassten Fahrzeugparametern (P_{F}) durch die Auswerteeinheit (38) ermittelt wird, und der aktuelle Betriebspunkt (BPᵢₛₜ) mit dem optimalen Betriebspunkt (BPₛₒₗₗ) verglichen wird, wobei eine Regelung des dargestellten Betriebspunktes (BP_{ist,soll}), der Betriebsparameter (P_{B}) und/oder der Fahrzeugparameter (P_{F}) durch Interaktion mit der jeweiligen grafischen Darstellung des Betriebspunktes (BP_{ist,soll}) und/oder des jeweiligen Parameters (P_{B,F}) erfolgt.

2. Verfahren nach Anspruch 1, **dadurch gekennzeichnet, dass** basierend auf dem Vergleich zum Erreichen des optimalen Betriebspunktes (BPₛₒₗₗ) notwendige Änderungen der Betriebsparameter (P_{B}) und/oder Fahrzeugparameter (P_{F}) durch die Auswerteeinheit (38) bestimmt, ausgegeben und/oder zumindest teilweise automatisch geregelt werden.

3. Verfahren nach Anspruch 1 oder 2, **dadurch gekennzeichnet, dass** das Kennfeld (40, 47) basierend auf den Eingabeparametern (P_{E}) durch Abrufen eines gespeicherten Kennfeldes (40, 47) und/oder Anpassen eines gespeicherten Kennfeldes (40, 47) erstellt wird.

4. Verfahren nach einem der vorherigen Ansprüche, **dadurch gekennzeichnet, dass** ein Kennfeld (40, 47) durch kontinuierliche und/oder diskontinuierliche Aufzeichnung und Speicherung von tatsächlichen Betriebspunkten (BPᵢₛₜ) und/oder Betriebsparametern (P_{B}) generiert und gespeichert wird.

5. Verfahren nach einem der vorherigen Ansprüche, **dadurch gekennzeichnet, dass** ein, insbesondere aus dem Kennfeld (40, 47) ermittelter, optimaler Betriebspunkt (BPₛₒₗₗ) mit Positionsdaten verknüpft und gespeichert wird.

6. Verfahren nach einem der vorherigen Ansprüche, **dadurch gekennzeichnet, dass** eine grafische Darstellung des Kennfeldes (40, 47), von Betriebsparametern (P_{B}) und/oder Fahrzeugparametern (P_{F}) generiert und ausgeben wird.

7. Verfahren nach einem der vorherigen Ansprüche, **dadurch gekennzeichnet, dass** das ein Bodenverdichtungsrisiko basierend auf den Eingabeparametern (P_{E}) und/oder Betriebsparametern (P_{B}) ermittelt wird.

8. Verfahren nach einem der vorherigen Ansprüche, **dadurch gekennzeichnet, dass** ein Betriebsparameter (P_{B}) ein Traktionseffizienz (η), ein Rollwiderstandskoeffizient ( 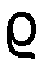 ), ein Traktionskoeffizient (κ) und/oder ein Schlupf ( 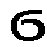 ) ist.

9. Verfahren nach einem der vorherigen Ansprüche, **dadurch gekennzeichnet, dass** ein Fahrzeugparameter (P_{F}) ein Reifendruck (P_{A,B}), eine Raddrehzahl, eine Zugkraft, eine Radkraft, eine Achslast, ein Raddrehmoment und/oder eine Motordrehzahl ist.

10. System zur Bestimmung eines Betriebspunktes (BP_{ist,soll}) für ein landwirtschaftliches Fahrzeug (10) mit Bodeneingriffsmitteln (16) zur Abstützung des Fahrzeugs (10) gegenüber einem Boden (18), einem Antriebsmotor (20) zum Antrieb der Bodeneingriffsmittel (16), Sensoren (30, 32, 36, 37) zur Erzeugung von Sensorsignalen, wobei ein Sensorsignal als Funktion eines gemessenen Fahrzeugparameters (P_{F}) generierbar ist, und einer Auswerteinheit (38), insbesondere zur Durchführung des Verfahrens und, zur Erfassung und Auswertung zumindest von Sensorsignalen, **dadurch gekennzeichnet, dass** in die Auswerteinheit (38) mindestens ein Eingabeparameter (P_{E}) eingebbar ist, basierend auf dem mindestens einen Eingabeparameter mindestens ein Kennfeld (40, 47) für Betriebsparameter (P_{B}) des Fahrzeuges (10) durch die Auswerteeinheit (38) erstellbar und ein optimaler Betriebspunkt (BPₛₒₗₗ) für das Fahrzeug (10) basierend auf dem Kennfeld (40, 47) bestimmbar und/oder basierend auf einer Position des Fahrzeuges (10) aus einer Speichereinheit (42) abrufbar ist, ein aktueller Betriebsparameter (BPᵢₛₜ) basierend auf erfassten Fahrzeugparametern (P_{F}), insbesondere Sensordaten, durch die Auswerteeinheit (38) ermittelbar ist, und der aktuelle Betriebspunkt (BPᵢₛₜ) mit dem optimalen Betriebspunkt (BPₛₒₗₗ) vergleichbar ist, wobei eine Regelung des dargestellten Betriebspunktes (BP_{ist,soll}), der Betriebsparameter (P_{B}) und/oder der Fahrzeugparameter (P_{F}) durch Interaktion mit der jeweiligen grafischen Darstellung des Betriebspunktes (BP_{ist,soll}) und/oder des jeweiligen Parameters (P_{B,F}) erfolgt.

11. System nach Anspruch 10, **dadurch gekennzeichnet, dass** basierend auf dem Vergleich zum Erreichen des optimalen Betriebspunktes (BPₛₒₗₗ) notwendige Änderungen der Betriebsparameter (P_{B}) und/oder Fahrzeugparameter (P_{F}) durch die Auswerteeinheit (38) bestimmbar, ausgebbar und/oder zumindest teilweise automatisch, regelbar sind.

12. Landwirtschaftliches Fahrzeug mit einem System eingerichtet zur Bestimmung eines Betriebspunktes (BP_{ist, soll}) gemäß einem Verfahren nach einem der Ansprüche 1 bis 9, wobei das Fahrzeug (10) ballastierbar ist, eine regelbare Motordrehzahl aufweist und/oder ein Druck (P_{A,B}) in Bodeneingriffsmitteln (16) regelbar ist.

## Claims

1. A method for determining an operating point (BP_{actual, nominal}) for an agricultural vehicle (10) with ground engaging devices (16) for supporting the vehicle (10) against ground (18), a propulsion engine (20) for driving the ground engaging device (16), sensors (30, 32, 36, 37) for producing sensor signals, wherein a sensor signal can be generated as a function of a measured vehicle parameter (P_{F}), and an evaluation unit (38) for executing the method and for acquiring and analysing sensor signals at least, **characterized in that**
at least one input parameter (P_{E}) is input into the evaluation unit (38), at least one performance characteristic (40, 47) for operating parameters (P_{B}) of the vehicle (10) is compiled by the evaluation unit (38) based on the at least one input parameter (P_{E}) and an optimal operating point (BPₙₒₘᵢₙₐₗ) based on the performance characteristic (40, 47) is determined and/or is retrieved from a storage unit (42) on the basis of a position of the vehicle, a current operating parameter (BP_{actual}) based on acquired vehicle parameters (P_{F}) is determined by the evaluation unit (38), and the current operating point (BP_{actual}) is compared with the optimal operating point (BPₙₒₘᵢₙₐₗ), whereupon an adjustment of the represented operating point (BP_{actual, nominal}), the operating parameter (P_{B}) and/or the vehicle parameter (P_{F}) is carried out by interaction with the respective graphical representation of the operating point (BP_{actual, nominal}) and/or of the respective parameter (P_{B,F}).

2. The method according to claim 1, **characterized in that**, based on the comparison, in order to reach the optimal operating point (BPₙₒₘᵢₙₐₗ), necessary changes to the operating parameters (P_{B}) and/or vehicle parameters (P_{F}) are determined, output and/or at least partially automatically controlled by the evaluation unit (38).

3. The method according to claim 1 or claim 2, **characterized in that** the performance characteristic (40, 47) is compiled on the basis of the input parameters (P_{E}) by retrieving a stored performance characteristic (40, 47) and/or adapting a stored performance characteristic (40, 47).

4. The method according to one of the preceding claims, **characterized in that** a performance characteristic (40, 47) is generated and stored by continuously and/or discontinuously recording and storing actual operating points (BP_{actual}) and/or operating parameters (P_{B}).

5. The method according to one of the preceding claims, **characterized in that** an optimal operating point (BPₙₒₘᵢₙₐₗ), in particular determined from the performance characteristic (40, 47), is linked to position data and stored.

6. The method according to one of the preceding claims, **characterized in that** a graphical representation of the performance characteristic (40, 47) is generated and output from operating parameters (P_{B}) and/or vehicle parameters (P_{F}).

7. The method according to one of the preceding claims, **characterized in that** a ground compaction risk is determined based on the input parameters (P_{E}) and/or operating parameters (P_{B}).

8. The method according to one of the preceding claims, **characterized in that** an operating parameter (P_{B}) is a traction efficiency (η), a coefficient of rolling resistance (ρ), a traction coefficient (κ) and/or a slippage (σ).

9. The method according to one of the preceding claims, **characterized in that** a vehicle parameter (P_{F}) is a tyre pressure (P_{A,B}), a wheel rotational speed, tractive power, a wheel force, an axle load, a wheel torque and/or an engine speed.

10. A system for determining an operating point (BP_{actual, nominal}) for an agricultural vehicle (10) with ground engaging devices (16) for supporting the vehicle (10) against ground (18), a propulsion engine (20) for driving the ground engaging device (16), sensors (30, 32, 36, 37) for producing sensor signals, wherein a sensor signal can be generated as a function of a measured vehicle parameter (P_{F}), and an evaluation unit (38) in particular for executing the method and for acquiring and analysing sensor signals at least, **characterized in that**
at least one input parameter (P_{E}) can be input into the evaluation unit (38), at least one performance characteristic (40, 47) for operating parameters (P_{B}) of the vehicle (10) can be compiled by the evaluation unit (38) based on the at least one input parameter and an optimal operating point (BPₙₒₘᵢₙₐₗ) for the vehicle (10) based on the performance characteristic (40, 47) can be determined and/or can be retrieved from a storage unit (42) on the basis of a position of the vehicle (10), a current operating parameter (BP_{actual}) based on acquired vehicle parameters (P_{F}), in particular sensor data, can be determined by the evaluation unit (38), and the current operating point (BP_{actual)} can be compared with the optimal operating point (BPₙₒₘᵢₙₐₗ₎, whereupon an adjustment of the represented operating point (BP_{actual, nominal}), the operating parameter (P_{B}) and/or the vehicle parameter (P_{F}) is carried out by interaction with the respective graphical representation of the operating point (BP_{actual, nominal}) and/or of the respective parameter (P_{B,F}).

11. The system according to claim 10, **characterized in that**, based on the comparison, in order to reach the optimal operating point (BPₙₒₘᵢₙₐₗ), necessary changes to the operating parameters (P_{B}) and/or vehicle parameters (P_{F}) can be determined, output and/or at least partially automatically controlled by the evaluation unit (38).

12. An agricultural vehicle having a system which is configured for determining an operating point (BP_{actual, nominal}) as claimed in a method according to one of claims 1 to 9, wherein the vehicle (10) can be ballasted, has a variable engine speed and/or a pressure (P_{A,B}) in the ground engaging devices (16) can be varied.

## Revendications

1. Procédé de détermination d'un point de fonctionnement (BP_{ist, soll}) pour un véhicule agricole (10) comprenant des moyens de prise au sol (16) pour supporter le véhicule (10) par rapport à un sol (18), comprenant un moteur d'entraînement (20) pour entraîner les moyens de prise au sol (16), comprenant des capteurs (30, 32, 36, 37) pour générer des signaux de capteurs, un signal de capteur étant générable en fonction d'un paramètre de véhicule mesuré (P_{F}), et comprenant une unité d'analyse (38) pour mettre en œuvre le procédé et pour détecter et analyser au moins des signaux de capteurs, **caractérisé en ce que** dans l'unité d'analyse (38) est entré au moins un paramètre d'entrée (P_{E}), sur la base duquel au moins un paramètre d'entrée (P_{E}) est établi par l'unité d'analyse (38) au moins un diagramme caractéristique (40, 47) pour des paramètres d'exploitation (P_{B}) du véhicule (10), et un point de fonctionnement optimal (BPₛₒₗₗ) est déterminé sur la base du diagramme caractéristique (40, 47) et/ou, sur la base d'une position du véhicule, est consulté dans une unité de mémoire (42), un paramètre d'exploitation instantané (BPᵢₛₜ) étant déterminé par l'unité d'analyse (38) sur la base de paramètres de véhicule détectés (P_{F}), et le point de fonctionnement instantané (BPᵢₛₜ) est comparé avec le point de fonctionnement optimal (BPₛₒₗₗ), une régulation du point de fonctionnement représenté (BP_{ist, soll}), des paramètres d'exploitation (P_{B}) et/ou des paramètres de véhicule (P_{F}) s'effectuant par interaction avec la représentation graphique respective du point de fonctionnement (BP_{ist, soll}) et/ou du paramètre respectif (P_{B,F}).

2. Procédé selon la revendication 1, **caractérisé en ce que**, sur la base de la comparaison, pour atteindre le point de fonctionnement optimal (BPₛₒₗₗ), des modifications nécessaires des paramètres d'exploitation (P_{B}) et/ou paramètres de véhicule (P_{F}) sont déterminées, éditées et/ou au moins en partie automatiquement régulées par l'intermédiaire de l'unité d'analyse (38).

3. Procédé selon la revendication 1 ou 2, **caractérisé en ce que** le diagramme caractéristique (40, 47) est établi sur la base des paramètres d'entrée (P_{E}) par consultation d'un diagramme caractéristique mémorisé (40, 47) et/ou par adaptation d'un diagramme caractéristique mémorisé (40, 47).

4. Procédé selon une des revendications précédentes, **caractérisé en ce qu'**un diagramme caractéristique (40, 47) est généré et mémorisé par enregistrement et mémorisation continus et/ou discontinus de points de fonctionnement (BPᵢₛₜ) et/ou paramètres d'exploitation (P_{B}) effectifs.

5. Procédé selon une des revendications précédentes, **caractérisé en ce qu'**un point de fonctionnement optimal (BPₛₒₗₗ) , en particulier déterminé à partir du diagramme caractéristique (40, 47), est associé à des données de position et mémorisé.

6. Procédé selon une des revendications précédentes, **caractérisé en ce qu'**une représentation graphique du diagramme caractéristique (40, 47), de paramètres d'exploitation (P_{B}) et/ou de paramètres de véhicule (P_{F}) est générée et éditée.

7. Procédé selon une des revendications précédentes, **caractérisé en ce qu'**un risque de compaction du sol est déterminé sur la base des paramètres d'entrée (P_{E}) et/ou de paramètres d'exploitation (P_{B}) .

8. Procédé selon une des revendications précédentes, **caractérisé en ce qu'**un paramètre d'exploitation (P_{B}) est une efficience de traction (η), un coefficient de résistance au roulement ( 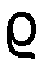 ), un coefficient de traction (κ) et/ou un glissement (σ).

9. Procédé selon une des revendications précédentes, **caractérisé en ce qu'**un paramètre de véhicule (P_{F}) est une pression de pneumatiques (P_{A,B}), une vitesse de rotation de roue, une force de traction, une force de roue, une charge d'essieu, un moment de rotation de roue et/ou un régime moteur.

10. Système de détermination d'un point de fonctionnement (BP_{ist, soll}) pour un véhicule agricole (10) comprenant des moyens de prise au sol (16) pour supporter le véhicule (10) par rapport à un sol (18), comprenant un moteur d'entraînement (20) pour entraîner les moyens de prise au sol (16), comprenant des capteurs (30, 32, 36, 37) pour générer des signaux de capteurs, un signal de capteur étant générable en fonction d'un paramètre de véhicule mesuré (P_{F}), et comprenant une unité d'analyse (38) en particulier pour mettre en œuvre le procédé et pour détecter et analyser au moins des signaux de capteurs, **caractérisé en ce que** dans l'unité d'analyse (38) peut être entré au moins un paramètre d'entrée (P_{E}), sur la base duquel au moins un paramètre d'entrée peut être établi par l'unité d'analyse (38) au moins un diagramme caractéristique (40, 47) pour des paramètres d'exploitation (P_{B}) du véhicule (10), et un point de fonctionnement optimal (BPₛₒₗₗ) pour le véhicule (10) peut être déterminé sur la base du diagramme caractéristique (40, 47) et/ou, sur la base d'une position du véhicule, peut être consulté dans une unité de mémoire (42), un paramètre d'exploitation instantané (BPᵢₛₜ) pouvant être déterminé par l'unité d'analyse (38) sur la base de paramètres de véhicule détectés (P_{F}), en particulier de données de capteurs, et le point de fonctionnement instantané (BPᵢₛₜ) peut être comparé avec le point de fonctionnement optimal (BPₛₒₗₗ), une régulation du point de fonctionnement représenté (BP_{ist, soll}), des paramètres d'exploitation (P_{B}) et/ou des paramètres de véhicule (P_{F}) s'effectuant par interaction avec la représentation graphique respective du point de fonctionnement (BP_{ist, soll}) et/ou du paramètre respectif (P_{B,F}) .

11. Système selon la revendication 10, **caractérisé en ce que**, sur la base de la comparaison, pour atteindre le point de fonctionnement optimal (BPsoll), des modifications nécessaires des paramètres d'exploitation (PB) et/ou paramètres de véhicule (PF) peuvent être déterminées, éditées et/ou au moins en partie automatiquement régulées par l'intermédiaire de l'unité d'analyse (38) .

12. Véhicule agricole comprenant un système agencé pour déterminer un point de fonctionnement (BP_{ist, soll}) conformément à un procédé selon une des revendications 1 à 9, le véhicule (10) pouvant être lesté, comportant un régime moteur régulable et/ou une pression (P_{A,B}) dans des moyens de prise au sol (16) étant régulable.
